# EUROPEAN PATENT APPLICATION

(11) **EP 3 203 432 A1**
(43) Date of publication of application: **09.08.2017**
(21) Application number: 15845661.6
(22) Date of filing: 01.10.2015
(51) Int. Cl.: G06Q 40/02, G06Q 50/22

(54) **TALENT DONATION BANK SERVICE PROVISION METHOD AND SYSTEM**

(30) Priority: 01.10.2014 KR 20140132157
(71) Applicant: Ham, Ki Chul, Yesan-gun, Chungcheongnam-do 32440 (KR)
(72) Inventor: Ham, Ki Chul, Yesan-gun, Chungcheongnam-do 32440 (KR)
(74) Representative: dompatent von Kreisler Selting Werner - Partnerschaft von Patent- und Rechtsanwälten mbB
(86) International application number: PCT/KR2015/010412
(87) International publication number: WO 2016/053038

(57) **Abstract**

The purpose of the present invention is to provide a talent donation bank service provision system and method, which efficiently utilize and support human resources through a talent donation bank service including a talent donator pool, and the talent donation bank service provision system is a talent donation bank service provision system comprising at least one user terminal and a talent donation bank service server connected to the user terminal through a network, wherein the talent donation bank service server comprises: a transmission and reception unit for receiving a customer's capital investment request from the user terminal; an authentication unit for receiving an authentication, from a corresponding school server, of the customer's talent recognition degree, competency recognition degree, or talent and competency recognition degree; a value evaluation unit for evaluating, as asset values, according to preset criteria, the talent recognition degree, the competency recognition degree, or the talent and competency recognition degree of which the authentication has been obtained through the authentication unit; and an investment unit for transmitting investment funds to the customer according to the evaluation result of the value evaluation unit.

## Description

### [Technical Field]

Embodiments of the present invention relate to a method and system for providing a talent donation bank service.

### [Background Art]

Knowledge possessed by a person is a source of competitiveness in the knowledge-based society. Accordingly, the development and effective utilization of human resources are very important in terms of the competitiveness of countries or companies.

Many companies recently convert their organization systems into the strategy of growth on the basis of human resources, in which knowledge and technologies are accumulated, instead of the strategy of growth on the basis of the input of capital or a labor force which has reached its limit.

However, an education management system currently used in the university or graduate school fails to support the development or effective utilization of human resources for their students. Although some universities promote to develop human resources using an education management method based on on-site and practical education, there is a disadvantage in that the utilization scope of the education management method is limited in terms of the development or utilization of human resources who have talent or careers because an educational system for granting a degree based on various types of talent or careers possessed by students is not taken into consideration.

Meanwhile, there has recently been suggested an educational system for qualifying some talent, careers or talent and careers and obtaining a degree based on such qualified talents, careers or talents and careers. An example of such an educational system has been disclosed in Korean Patent Application Publication No. 10-143536 filed by the applicant of the present invention.

The Korean Patent Application Publication No. 10-143536 discloses an educational management system and educational management method by approving talent and career-based credits, wherein a degree can be obtained by only talent, careers or a talent and career. In the prior art, however, talent, a career or a talent and career is approved as credits and a degree is granted based on the approved talent, career or talent and career, but the prior art is still insufficient in the development or efficient utilization of human resources.

### [Technical Problem]

An embodiment of the present invention is to provide a system and method for providing a talent donation bank service, which is capable of efficiently utilizing and supporting human resources through a talent donation bank service including a talent donator pool.

Another embodiment of the present invention is to provide a system and method for providing a talent donation bank service, which is capable of performing online financial support on a customer (a talent, competence or talent and competence donator, etc.) through a talent donation bank service.

### [Technical Solution]

To achieve the above objects, a system for providing a talent donation bank service according to an aspect of the present invention is a system for providing a talent donation bank service, including at least one user terminal and a talent donation bank service server connected to the user terminal over a network. The talent donation bank service server includes a transmission and reception unit which receives the fund investment request of a customer from the user terminal; an authentication unit which has the talent qualification degree, competence qualification degree or talent and competence qualification degree of the customer authenticated by a corresponding school server; a value evaluation unit which evaluates the talent qualification degree, the competence qualification degree or the talent and competence qualification degree authenticated through the authentication unit as a property value based on a predetermined criterion; and an investment unit which transmits investment funds to the customer based on the evaluation results of the value evaluation unit.

In an embodiment, the value evaluation unit may calculate the evaluation results by evaluating the talent qualification degree, the competence qualification degree or the talent and competence qualification degree using predetermined one time or a 1-day tuition fee as a first criterion, evaluating the talent qualification degree, the competence qualification degree or the talent and competence qualification degree using a daily mean value of lecture opening times for a predetermined related subject during a recent specific period as a second criterion, or combining the first criterion and the second criterion.

In an embodiment, the system for providing a talent donation bank service may further include a cooperation investment matching unit which extracts a cooperation investor whose conformity degree for at least one item of the evaluation results is a specific reference value or more from a cooperation investor list previously stored based on the evaluation results of the value evaluation unit and matches a cooperation investor who has the highest conformity degree with the customer. In this case, the investment unit may transmit the investment funds of the cooperation investor matched by the cooperation investment matching unit to the customer.

In an embodiment, the system for providing a talent donation bank service may further include at least one storage unit which is connected to the transmission and reception unit and stores the fund investment request, which is connected to the authentication unit and stores authentication results, which is connected to the value evaluation unit and stores the evaluation results, and which is connected to the investment unit and stores the bank statement history of the investment funds for the customer.

A system for providing a talent donation bank service according to another aspect of the present invention is a system for providing a talent donation bank service, which provides a talent donation bank service in association with a school server for granting a talent qualification degree, a competence qualification degree or a talent and competence qualification degree. The system may include a storage unit including a database which stores user information about a customer who has a talent qualification degree, a competence qualification degree or a talent and competence qualification degree; a value evaluation unit which evaluates the talent qualification degree, the competence qualification degree or the talent and competence qualification degree as a property value based on a predetermined criterion; and an investment message transmission unit which transmits an investment guidance message, including an investment fund amount according to the evaluation results of the value evaluation unit, to the user terminal of the customer. In this case, the investment guidance message may include a calculation criterion for the investment fund amount and a talent donation condition for the repayment of the investment funds.

A system for providing a talent donation bank service according to yet another aspect of the present invention is a system for providing a talent donation bank service, including a talent donation bank service server connected to a school server which grants a talent qualification degree, a competence qualification degree or a talent and competence qualification degree, a bank server and at least one user terminal over a network. The talent donation bank service server may include a talent donator management unit which manages a talent qualification degree, competence qualification degree or a talent and competence qualification degree of a customer of the user terminal while operating in conjunction with the school server; a value evaluation unit which evaluates the talent qualification degree, the competence qualification degree or the talent and competence qualification degree as a property value based on a predetermined criterion; and an investment consultation unit which transmits an investment consultation message, including an investment fund amount capable of being requested by the customer based on the evaluation results of the value evaluation unit, to the bank server. In this case, the investment consultation message may include a calculation criterion for the investment fund amount and a talent donation condition for the repayment of the investment funds.

A method for providing a talent donation bank service according to yet another aspect of the present invention is a method for providing a talent donation bank service in a talent donation bank service server connected to a school server which grants a talent qualification degree, a competence qualification degree or a talent and competence qualification degree, a bank server and at least one user terminal over a network. The talent donation bank service server includes a talent donator management unit, a transmission and reception unit, an authentication unit, a storage unit, a value evaluation unit, an investment unit, an investment message transmission unit and an investment consultation unit controlled by a control unit. The method may include a series of processes of managing the talent qualification degree, competence qualification degree or talent and competence qualification degree of a user while operating in conjunction with the school server through the talent donator management unit, receiving the fund investment request of the customer from the user terminal through the transmission and reception unit, having the talent qualification degree, competence qualification degree or talent and competence qualification degree of the customer authenticated by a corresponding school server through the authentication unit, storing user information about the customer who has the talent qualification degree, the competence qualification degree or the talent and competence qualification degree through the storage unit, evaluating the previously authenticated talent qualification degree, the competence qualification degree or the talent and competence qualification degree as a property value based on a predetermined criterion through the value evaluation unit, and transmitting investment funds to the customer based on the evaluation results through the investment unit, transmitting an investment guidance message including the investment fund amount according to the evaluation results to the user terminal of the customer through the investment message transmission unit, or transmitting an investment consultation message including the investment fund amount capable of being requested by the customer based on the evaluation results to the bank server through the investment consultation unit.

In an embodiment, when the talent donation bank service server further includes a cooperation investment matching unit connected to the control unit, the service method may further include a process of extracting a cooperation investor whose conformity degree for at least one item of evaluation results is a specific reference value or more from a previously stored cooperation investor list through the cooperation investment matching unit and matching a cooperation investor who has the highest conformity degree with the customer. The investment unit may be implemented to transmit the investment funds of the cooperation investor matched by the cooperation investment matching unit to the customer.

### [Advantageous Effects]

In accordance with the present invention, there can be provided the system and method for providing a talent donation bank service, which are capable of efficiently utilizing and supporting human resources through the talent donation bank service including a talent, career or talent and career donator pool. That is, there can be provided the system and method for providing a talent donation bank service, which are capable of obtaining user information for a customer (a talent, competence or talent and competence donator, etc.) and efficiently utilizing human resources online using the user information in association with the educational system that grants a talent, competence or talent and competence qualification degree.

Another embodiment of the present invention is to provide the system and method for providing a talent donation bank service, which are capable of performing online financial support on a customer (a talent, competence or talent and competence donator, etc.) through the talent donation bank service. That is, there can be provided the system and method for providing a talent donation bank service, wherein a fund investment request related to financial support, etc. is received from a customer, a lendable investment fund amount is calculated through the evaluation of a value for the customer's talent, career or talent and career and the calculated investment funds are transmitted to the customer or an investment fund guidance for the customer is performed, and convenient financial transactions of the investment funds for the customer can be supported in association with a bank server.

### [Description of Drawings]

FIG. 1 shows a general configuration of a system for providing a talent donation bank service in accordance with an embodiment of the present invention.
FIG. 2 shows a schematic configuration of the talent donation bank service server of the system of FIG. 1.
FIG. 3 is a flowchart of a method for providing a talent donation bank service in accordance with an embodiment of the present invention.
FIG. 4 is a flowchart of a method for providing a talent donation bank service in accordance with another embodiment of the present invention.
FIG. 5 is a flowchart of a method for providing a talent donation bank service in accordance with yet another embodiment of the present invention.
FIG. 6 is a flowchart of a method for providing a talent donation bank service in accordance with yet another embodiment of the present invention.

### [Mode for Invention]

Hereinafter, preferred embodiments of the present invention are described in detail with reference to the accompanying drawings so that a person having ordinary skill in the art to which the present invention pertains may easily practice the embodiments. In this case, it is to be understood that the embodiments described in the specification and the configurations shown in the drawings are only preferred embodiments of the present invention and various equivalents and modifications capable of substituting the embodiments at the time of filing of this application may be present. Furthermore, in describing the operating principle of a preferred embodiment of the present invention in detail, a detailed description of a known art related to the present invention will be omitted if it is deemed to make the gist of the present invention unnecessarily vague. Terms to be described hereunder are terms defined by taking into consideration functions in the present invention, and the meaning of each term should be interpreted based on contents over the entire specification. Furthermore, the same reference numerals designate elements having similar functions and operations throughout the drawings.

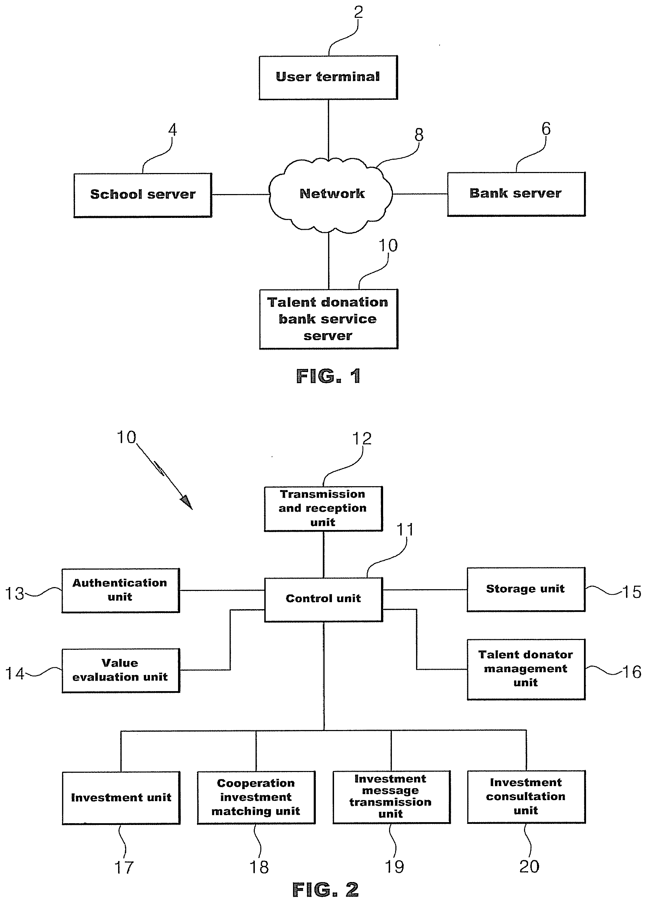

FIG. 1 shows a general configuration of a system for providing a talent donation bank service in accordance with an embodiment of the present invention.

Referring to FIG. 1, a talent donation bank service server 10 (hereinafter simply referred to as a "service server") according to the present embodiment is connected to a user terminal 2, a school server 4 and a bank server 6 over a network 8.

For reference, the term "talent donation bank" is an expression that represents a talent donation bank, a competence donation bank and a talent and competence donation bank in the system or method of the present embodiment which have been designed to efficiently utilize a donator and support the financial transactions of a donator by forming a talent, competence or talent and competence donator pool. Accordingly, the term "talent donation bank" may be substituted with a competence donation bank or a talent and competence donation bank according to circumstances.

The service server 10 may include memory in which a program for a talent donation bank service has been stored and a processor which provides the talent donation bank service by performing the program stored in the memory. Furthermore, the service server 10 may include communication means or a communication interface connected to the network 8.

The user terminal 2 may be means which is connected to the service server 10 over the network 8 and which can transmit and receive a signal and data or an element which performs a function corresponding to such means. For example, the user terminal 2 may be implemented using a desktop computer, a notebook computer, a tablet mobile terminal, a portable terminal or the like. The portable terminal may include a high-performance and multi-function mobile terminal so called a smart phone.

The school server 4 includes an educational system for granting a talent, career or talent and career qualification degree. The school server 4 may include an educational system for qualifying and granting a degree by only talent, a career or a talent and career.

Furthermore, the school server 4 may be implemented to provide the service server 10 with at least some of educational information of a student who has a talent, career or talent and career qualification degree in accordance with a specific contract. In this case, the service server 10 may operate to store at least some of the educational information of the student, received by the school server 4, in the storage unit as a customer's user information based on the contents of the contract or to access the school server 4 and obtain educational information for a required student, if necessary. If the school server 4 and the service server 10 are managed by the same owner or the same administrator or the like, a separate contract may be omitted.

The bank server 6 may include the server of an official financial institute which is capable of obtaining permission from a country or the representative of an administrative district or a person in charge and performing financial transaction business. The bank server 6 is connected to the network 8 and may be implemented to support convenient online financial business for a contracted customer. For example, in the present embodiment, the bank server 6 may be implemented to perform business, such as a simplified investment fund load, on a customer who performs online financial transactions through the user terminal 2 connected to the service server 10.

The network 8 may include a wired, wireless or wired/wireless communication network. That is, the network 8 may include all of types of communication infrastructure capable of mutual communication through the transmission/reception of signals and data, such as a short-distance wireless communication network, a public switched network, a data network, the Internet, a satellite network or a combination of them.

FIG. 2 shows a schematic configuration of the talent donation bank service server of the system of FIG. 1.

Referring to FIG. 2, the service server 10 according to the present embodiment may be configured to included a control unit 11, a transmission and reception unit 12, an authentication unit 13, a value evaluation unit 14, a storage unit 15, a talent donator management unit 16, an investment unit 17, a cooperation investment matching unit 18, an investment message transmission unit 19 and an investment consultation unit 20.

Each of the elements is described in more detail. The control unit 11 may correspond to the central processing unit of the service server 10. Furthermore, the control unit 11 may effectively provide the talent donation bank service to the user terminal in association with the school server and/or the bank server by controlling the elements of the service server 10 by performing the program stored in the memory, that is, part of the storage unit 15. The control unit 11 may be implemented to include a plurality of microprocessors for processing signals or data in a distributed manner or in parallel in addition to a single processor.

The transmission and reception unit 12 may be equipped with communication means or a communication interface device installed for communication with the user terminal, the school server and the bank server. The transmission and reception unit 12 may be implemented to comply with the communication standard of the user terminal, the school server and the bank server or the communication standard of a network for processing a communication signal and data between the user terminal, the school server and the bank server.

The authentication unit 13 may be basically used to authenticate the user terminal, the school server or the bank server which accesses the service server 10. Furthermore, the authentication unit 13 may be means for approving the talent qualification degree, competence qualification degree or talent and competence qualification degree of a specific customer through association with the school server. For such an approval task, the authentication unit 13 may be implemented to be associated with a separate higher authentication institute (an official authentication institute, etc.).

The value evaluation unit 14 may be implemented to evaluate the talent qualification degree, competence qualification degree or talent and competence approval degree of a customer as a property value based on a predetermined criterion. For example, the value evaluation unit 14 may be implemented to evaluate a predetermined one time or 1-day tuition fee based on a first criterion, to evaluate the daily mean value of lecture opening times for a predetermined related subject for a recent specific period as a second criterion or to calculate evaluation results by combining the first criterion and the second criterion in relation to a talent, competence or talent and competence qualification degree.

Furthermore, the predetermined criterion of the value evaluation unit 14 may be implemented to evaluate a gain or profit which may be obtained by an enterprise one time or for a specific period (1 day, etc.) using the talent, competence or talent and competence of a customer as a financial value. For example, the value evaluation unit 14 may be implemented to financially evaluate an effect which may be obtained when the talent, competence or talent and competence of a customer is utilized in association with the activities of an enterprise, such as public relations, an advertising and/or cooperation.

The aforementioned value evaluation method of the value evaluation unit 14 may be implemented using at least one of a variety of conventional PR evaluation methods which may be used to evaluate an effect of public relations of a model in the field of public relations in which an entertainer, a broadcaster, an athlete, etc. is utilized as a model or a combination of the variety of conventional PR evaluation methods. Furthermore, the value evaluation method may be implemented to compute evaluation results based on the results of the simulation of media evaluation for each news item, paper evaluation, photo evaluation, section evaluation, etc. in the aforementioned PR evaluation methods. A simulator for the value evaluation may use a simulation system which has been determined to be a tool suitable for the value evaluation of talent, competence or talent and competence through trials and errors.

The storage unit 15 is connected to the transmission and reception unit 12 and may be implemented to store a fund investment request. The storage unit 15 is connected to the authentication unit 13 and may be implemented to store an authentication result. The storage unit 15 is connected to the value evaluation unit 14 and may be implemented to store evaluation results. The storage unit 15 is connected to the investment unit 17 and may be implemented to store a bank statement history of investment funds for a customer.

Furthermore, the storage unit 15 may store a cooperation investor list, may provide a cooperation investor list or specific cooperation investor information in response to a request from the cooperation investment matching unit 18, and may store a bank statement history of investment funds or a transmission/reception history of an investment fund guidance message through the cooperation investment matching unit 18.

Furthermore, the storage unit 15 may store information, such as information about the calculation criterion of an investment fund amount, information about the repayment of investment funds, a talent donation condition for the repayment of investment funds and so on, which may be used in the investment message transmission unit 19.

Furthermore, the storage unit 15 may store an investment consultation message which may be used for the investment consultation unit 20 to provide the investment consultation message to the bank server. In this case, the investment consultation message may include an investment fund amount which may be requested by a customer based on the evaluation results of the value evaluation unit 14. Furthermore, the investment consultation message may include a calculation criterion for an investment fund amount or a talent donation condition for the repayment of investment funds. In this case, the term "talent donation condition" is an expression that represents a competence donation condition or a talent and competence donation condition.

The talent donator management unit 16 manages a talent donator in association with the school server. In this case, the talent donator may refer to a talent, competence or talent and competence donator. The talent donator management unit 16 is connected to the school server which grants a degree by approving a talent, competence or talent and competence as credits in real time or periodically, and may be implemented to receive at least some data of educational information stored in the school server and to store the received at least some data in the storage unit 15. In accordance with the talent donator management unit 16, there are advantages in that excellent human resources can be effectively utilized and financial support for a customer (talent donator) can be effectively performed because a talent donator pool including a plurality of talent donators is formed.

The investment unit 17 may be implemented to transmit investment funds to a customer based on the evaluation results of the value evaluation unit 14. In this case, the investment unit 17 may be implemented to transmit the investment funds to the customer or a bank account written in the fund investment request of the customer received through the user terminal or to transmit only at least some of the investment funds to the bank account of the customer based on contents (a partial investment permission option check, etc.) written in the fund investment request of the customer.

The cooperation investment matching unit 18 may be implemented to extract a cooperation investor whose conformity degree for at least one item of evaluation results is a specific reference value or more from a cooperation investor list previously stored based on the evaluation results of the value evaluation unit 14 and to match a cooperation investor who has the highest index of conformity with a customer. That is, the cooperation investment matching unit 18 may be implemented to extract a cooperation investor who has the highest conformity degree based on the mark of a conformity degree, such as the code conformity mark of a talent donation field, the previous number of investments of a cooperation investor, and a feedback evaluation mark for talent donation, between the cooperation investor and a customer from a cooperation investor list extracted from information about a plurality of cooperation investors or partners stored in the storage unit 15. The code conformity degree of the talent donation field is described as an example. Code for the talent donation field may be implemented as in Table 1 below. In this case, the code conformity degree may be assigned in order of 10 marks, 5 marks and 1 mark depending on the position of the decimal point of code.

**[Table 1]**

| CODE (LARGE CLASSIFICATION FIELD) | 10 MARKS | 5 MARKS | 1 MARKS |
|---|---|---|---|
| A 1 b (fashion/style) | A * * | * 1 * | * * b |
| B 2 a (design/construction) | B * * | * 2 * | * * a |
| C 1 b (music/entertainment) | C * * | * 1 * | * * b |
| D 1 a (vehicle) | D * * | * 1 * | * * a |

In Table 1, the talent, competence or talent and competence of some fields, such as a fashion, a design, music and a vehicle, has been illustrated being evaluated, but the present invention is not limited to such elements. The present invention may be implemented to classify all of the past and current occupation groups and all of occupation groups to be developed in the future or all of school subjects within an educational curriculum into talent fields or career fields or detailed field thereof and applied them. Furthermore, the classification code of a talent donator whose conformity degree is compared with the code of a cooperation investor listed in Table 1 may be implemented to further add one or two positions of the decimal point in addition to the code of the cooperation investor. For example, the classification code of a talent donator, such as A1b17 or B2a23, may be assigned. In this case, the code of the first position may correspond to large classification, the code of the second position may correspond to middle classification, the code of the third position may correspond to small classification, and the code of the fourth and the fifth positions may correspond to a school subject and/or a serial number for occupation details classification.

The investment message transmission unit 19 may be implemented to transmit an investment guidance message, including an investment fund amount according to the evaluation results of the value evaluation unit 14, to the user terminal of a customer. The investment message transmission unit 19 may write an investment guidance message by inserting the investment fund amount of evaluation results into a basic message stored in the storage unit. Furthermore, the investment message transmission unit 19 may be implemented to write an investment guidance message including a calculation criterion for an investment fund amount and/or a talent donation condition for the repayment of investment funds. The investment message transmission unit 19 may be implemented to provide an investment guidance message to the user terminal in association with a message service providing apparatus for providing a text message service or a multimedia message service over a network.

The investment consultation unit 20 may be implemented to transmit an investment consultation message, including an investment fund amount that may be requested by a customer based on the evaluation results of the value evaluation unit 14, to the bank server. That is, the investment consultation unit 20 may be implemented to transfer a customer's user information and value evaluation results to the bank server based on the evaluation results of value evaluation on the basis of information written in the fund investment request of the customer. The investment consultation unit 20 may be responsible for playing the role of a mediator so that a series of simplified online financial business affairs can be performed between the bank server and the service server or the bank server and the user terminal of a customer recommended by the service server in accordance with a financial transaction contract.

Like the investment guidance message, the investment consultation message transferred from the investment consultation unit 20 to the bank server may include a calculation criterion for an investment fund amount and/or a talent donation condition for the repayment of investment funds.

Meanwhile, the service server 10 of the present embodiment is not limited to the aforementioned configuration, including all of the investment unit 17, the cooperation investment matching unit 18, the investment message transmission unit 19 and the investment consultation unit 20. The service server 10 may be implemented to include any one of some elements of the service server 10, for example, the investment unit 17, the cooperation investment matching unit 18, the investment message transmission unit 19 and the investment consultation unit 20 or a group of some of them that may be combined.

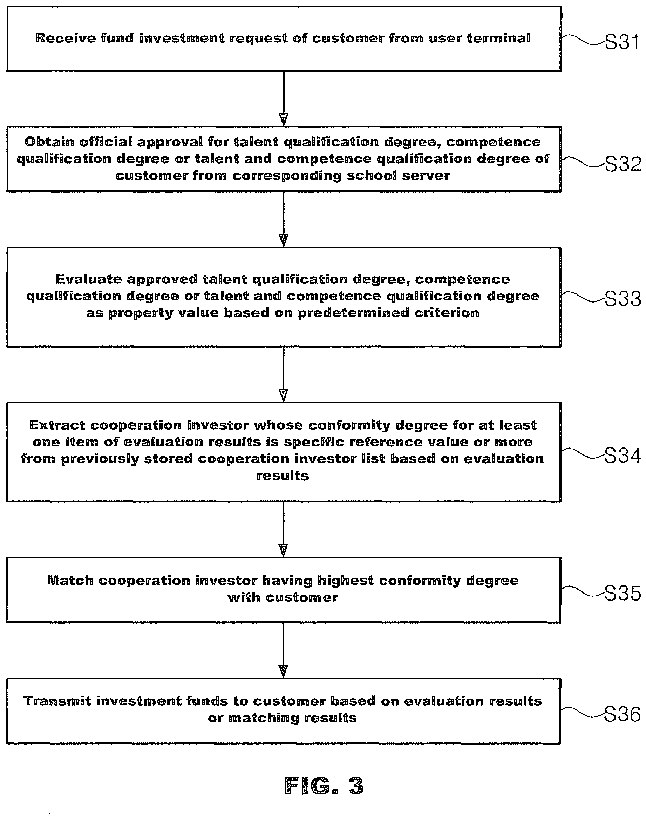

FIG. 3 is a flowchart of a method for providing a talent donation bank service in accordance with an embodiment of the present invention.

Referring to FIG. 3, the method for providing a talent donation bank service (hereinafter simply referred to as the "service method") according to the present embodiment may be started by first receiving, by the service server, the fund investment request of a customer from the user terminal (S31).

Next, the service server obtains official approval for the talent qualification degree, competence qualification degree or talent and competence qualification degree of the customer from a corresponding school server (S32).

Next, the service server evaluates the approved talent qualification degree, competence qualification degree or talent and competence qualification degree as a property value based on a predetermined criterion (S33).

Next, the service server extracts a cooperation investor whose conformity degree for at least one item of the evaluation results is a specific reference value or more from a previously stored cooperation investor list based on the evaluation results (S34).

Next, the service server matches a cooperation investor who has the highest conformity degree with the customer (S35). In this case, the customer is a currently approved talent donator and refers to a customer who has been subjected to value evaluation with respect to talent possessed the customer. Furthermore, the cooperation investor refers to an enterprise which has been previously registered with the service server as a partner or an employer for a talent donator, and may be implemented to operate in conjunction with a corresponding enterprise server in real time depending on an implementation.

Next, the service server transmits the investment funds to the customer based on the evaluation results or matching results (S36). The evaluation results or matching results may include a process of electronically checking, by the cooperation investor, the evaluation results or matching results based on an authorized base in an agreement that the cooperation investor pays some of or the entire investment funds based on the fund investment request and of electronically checking, by the customer, the evaluation results or matching results based on an authorized base in the corresponding agreement. In this case, the investment funds may be transferred from the service server or the cooperation investor or an investor account previously set in the bank server to the bank account of the customer.

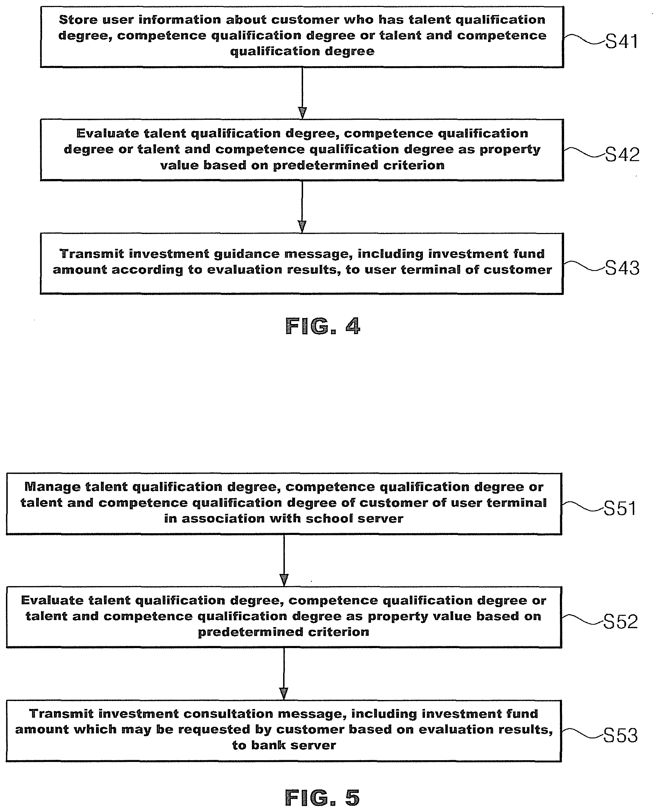

FIG. 4 is a flowchart of a method for providing a talent donation bank service in accordance with another embodiment of the present invention.

Referring to FIG. 4, the service method according to the present embodiment may be started by first receiving and storing, by the service server, user information about a customer who has a talent qualification degree, a competence qualification degree or a talent and competence qualification degree in association with the school server through the talent donator management unit (S41). In this case, the storage of the user information may include temporarily storing data, received in real time over a network, in volatile memory or storing received data in a storage medium (it may be part of the storage unit), such as the hard disk of the service server.

Next, the service server evaluates the talent qualification degree, the competence qualification degree or the talent and competence qualification degree as a property value based on a predetermined criterion (S42).

Next, the service server transmits an investment guidance message, including an investment fund amount according to the evaluation results, to the user terminal of the customer (S43).

In accordance with the present invention, an investment guidance message, including information about investment funds which may be invested in a customer who has a talent, career or talent and career qualification degree by performing value evaluation on user information about the customer with the consent of the customer in association with the school server or information about the repayment condition of the investment funds, is transmitted to the user terminal of the customer. Accordingly, a talent donation bank service can be provided, which is based on the utilization of human resources and a support scheme so that an opportunity for financial support for a customer can be expanded, simplified financial transactions based on a customer can be performed, and investment funds can be repaid through a talent donation, an enterprise public relations or advertising associated with talent donation, etc.

FIG. 5 is a flowchart of a method for providing a talent donation bank service in accordance with yet another embodiment of the present invention.

Referring to FIG. 5, the service method according to the present embodiment may be started by first managing, by the service server, user information about a customer who has a talent qualification degree, competence qualification degree or talent and competence qualification degree in association with the school server through the talent donator management unit (S51). The management of the user information may include accessing or receiving and storing at least some of educational information about a student who has a talent, competence or talent and competence qualification degree stored in the school server, while operating in conjunction with the school server in real time in order to generate, maintain and manage a talent donator pool.

Next, the service server may be implemented to make a financial transaction contract with the bank server online and to store the contents of the corresponding financial transaction contract in the storage unit, although not shown in FIG. 5. The contents of the financial transaction contract may include a series of the procedures of financial transaction business affairs for a simplified online load based on the value evaluation results of the service server with respect to the customer who has a talent, competence or talent and competence qualification degree and a method for performing the series of procedures.

Next, the service server evaluates the talent qualification degree, competence qualification degree or talent and competence qualification degree as a property value based on a predetermined criterion (S52).

Next, the service server transmits an investment consultation message, including an investment fund amount which may be requested by the customer based on the evaluation results, to the bank server (S53).

In this case, the bank server may prepare a loan agreement for a specific customer in a specific window, for example, a talent donator simplification online load window so that the loan agreement can be viewed and confirmed. Furthermore, a customer can conveniently perform an investment fund load by accessing the bank server through the user terminal, viewing a loan agreement in a specific window of the bank server, and confirming the loan agreement on an authorized base. The loan agreement may include contents in which talent donation or enterprise or product public relations or advertising associated with the talent donation is performed in a specific number, a specific time, a specific period, a specific place or under the condition of a combination of them as the repayment condition of the investment funds of a corresponding talent donator.

In accordance with the present invention, the service server relays a talent donator and a bank so that easy load business for the talent donator is made possible online. Furthermore, a new online service through which loaned money can be effectively repaid through the talent donation of a talent donator can be provided.

Meanwhile, in the aforementioned embodiment, the service server has been implemented to operate as an independent server different from the bank server, but the present invention is not limited to such a configuration. The service server may be implemented to perform the function of the bank server together or may be implemented to operate in an integrated manner while operating in conjunction with the bank server. In this case, the service server may be implemented to perform the method of the aforementioned embodiment by simply transferring data, including an investment consultation message, to the functional unit of the bank server.

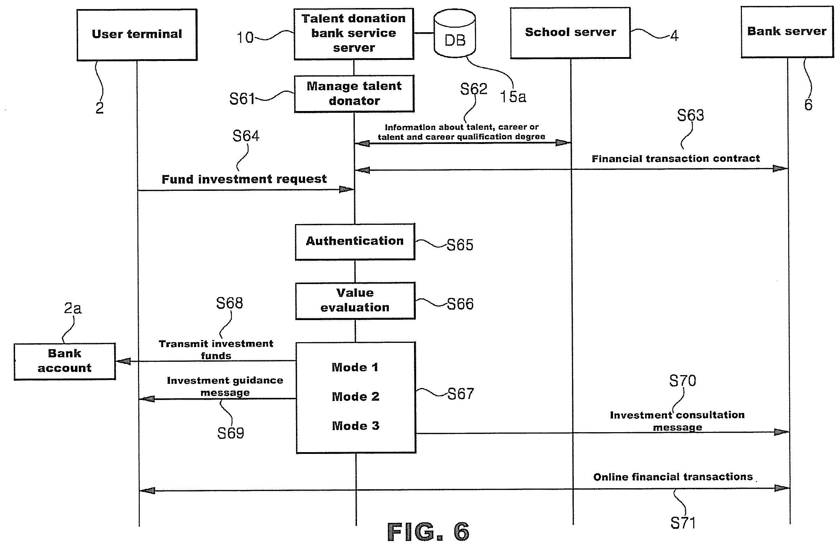

FIG. 6 is a flowchart of a method for providing a talent donation bank service in accordance with yet another embodiment of the present invention.

The service method according to the present embodiment may be implemented so that the service server 10 is connected to the user terminal 2, the school server 4 and the bank server 6 over a network and provides a series of talent donation bank services through cooperation and/or an interaction with them, as shown in FIG. 6.

Each of the steps is described in more detail. First, the service server 10 manages a talent donator through the talent donator management unit (S61). The management of the talent donator may include receiving, by the service server 10, information about a talent, career or talent and career qualification degree from the school server 12 through association with the service server 10 and the school server 4 and storing the information in a database 15a (S62).

Next, the service server 10 may perform a financial transaction contract for the talent donator in association with the bank server 6 (S63). In this case, the contents of the contract may be stored in the database 15a for each bank server. In this case, the database 15a may be a specific element that functions as at least part of the storage unit of the service server 10.

Next, the service server 10 may receive a fund investment request from the user terminal 2 (S64). The fund investment request may be implemented in such a manner that a customer fills a form provided by the service server 10 with contents, attaches a required document, and uploads the form onto the service server 10. Furthermore, the fund investment request may include essential writing information, such as user information about the customer, information about the talent, career or talent and career qualification degree of the customer, and information about a school that has granted the degree.

Next, the service server 10 may perform authentication on the talent, career or talent and career qualification degree of the customer based on previously stored degree information (S65). In a modified embodiment, the service server 10 may be implemented to access the school server 4 in real time, query the customer about the authentication of the talent, career or talent and career qualification degree, and receive a response to the query of the authentication from the school server 4.

Next, the service server 10 performs value evaluation on the authenticated talent, career or talent and career qualification degree as a property value (S66). The evaluation of the property value refers to calculating the activity, productivity and profit creation possibility of the customer who possesses the talent, career or talent and career qualification degree and tries to donate his or her talent in terms of money from a viewpoint of the customer himself or herself or association between the customer and a cooperation investor. The evaluation results of the property value for such talent, competence or talent and competence may be calculated by taking into consideration actually expected profits, such as the past and current tuition fee, lecture opening time, etc. and a tuition fee, a lecture opening time, etc. in the future and an environment for making profits.

As a simple example, the aforementioned value evaluation may be performed by evaluating the talent qualification degree, the competence qualification degree or the talent and competence qualification degree using predetermined one time or a predetermined 1-day/1-hour tuition fee as a first criterion, by evaluating the talent qualification degree, the competence qualification degree or the talent and competence qualification degree using the 1-day (or 1-month/20-days) mean value of a lecture opening time for a predetermined related subject during a recent specific period (e.g., 6 months or 1 year) as a second criterion, or by combining the first criterion and the second criterion. That is, if the 1-hour tuition fee is 500,000 Korean won, the lecture opening time of the related subject is an average of 700 hours/month nationwide in Korea, and students attending are an average of 70, the customer may perform talent donation of 5 million Korean won for 10 hours monthly. Accordingly, the evaluation results may be calculated as 5 million Korean won/month or 60 million Korean won/year. The service server may be implemented to add or subtract a specific amount in addition to the calculated evaluation results depending on other parameters or condition of the value evaluation.

Next, the service server 10 may relay the financial transactions of the customer according to a predetermined mode based on the evaluation results of the value evaluation for the talent, competence or a talent and career qualification degree of the customer (S67). In this case, the relay mode may include the transmission of investment funds (a first mode), the transmission of an investment guidance message (a second mode) and the transmission of an investment consultation message (a third mode).

In the case of the first mode, the service server 10 may transmit investment funds according to the evaluation results to the bank account 2a of the customer which has been written in the fund investment request (S68). In this case, an investor and the customer may additionally confirm and sign a specific investment fund agreement on an authorized base right before the transmission, but such a task is omitted in the present embodiment because the task would have been previously performed when the customer joined the talent donation bank service of the service server 10 and the specific investment fund agreement might have been stored to be valid for a specific period.

In the case of the second mode, the service server 10 transmits an investment guidance message, including an investment fund amount according to the evaluation results, to the user terminal 2 (S69). The investment guidance message may include a calculation criterion for the investment fund amount, a talent donation condition for the repayment of the investment funds, bank server access information and so on. If such an investment guidance message is used, the customer as a talent donator can conveniently access the bank server 6 and process a simplified investment fund load task (S71), thereby being capable of maximizing customer load convenience.

Furthermore, in the case of the third mode, the service server 10 transmits an investment consultation message, including the customer information and investment fund amount according to the evaluation results, to the bank server 6 (S70). The investment consultation message may include a calculation criterion for the investment fund amount, a talent donation condition for the repayment of the investment funds, information about the user terminal 2 of the customer 2 and so on. If such an investment consultation message is used, a bank as a cooperation investor or an investor can conveniently transmit a fund investment guidance message to the user terminal 2 and perform a simplified investment fund load task on a customer based on a response from the customer (S71), thereby being capable of obtaining advantages, such as expanding a load customer and/or supporting a talent donator.

Although the present invention has been described and shown in connection with the exemplary embodiments of the present invention for illustrating the technological spirit of the present invention, the present invention is not limited to only the shown and described configurations and operations. Those skilled in the art to which the present invention pertains will appreciate that the present invention may be properly changed and modified in various ways without departing from the category of the technological spirit of the present invention. Accordingly, all such proper changes and modifications and equivalents thereof should be construed as belonging to the range of right of the present invention.

## Claims

1. A system for providing a talent donation bank service, comprising at least one user terminal and a talent donation bank service server connected to the user terminal over a network, wherein the talent donation bank service server comprises:
a transmission and reception unit which receives a fund investment request of a customer from the user terminal;
an authentication unit which has a talent qualification degree, competence qualification degree or talent and competence qualification degree of the customer authenticated by a corresponding school server;
a value evaluation unit which evaluates the talent qualification degree, the competence qualification degree or the talent and competence qualification degree authenticated through the authentication unit as a property value based on a predetermined criterion; and
an investment unit which transmits investment funds to the customer based on evaluation results of the value evaluation unit.

2. The system of claim 1, wherein the value evaluation unit calculates the evaluation results by evaluating the talent qualification degree, the competence qualification degree or the talent and competence qualification degree using predetermined one time or a 1-day tuition fee as a first criterion, evaluating the talent qualification degree, the competence qualification degree or the talent and competence qualification degree using a daily mean value of lecture opening times for a predetermined related subject during a recent specific period as a second criterion, or combining the first criterion and the second criterion.

3. The system of claim 1, further comprising a cooperation investment matching unit which extracts a cooperation investor whose conformity degree for at least one item of the evaluation results is a specific reference value or more from a cooperation investor list previously stored based on evaluation results of the value evaluation unit and matches a cooperation investor who has a highest conformity degree with the customer,
wherein the investment unit transmits investment funds of the cooperation investor matched by the cooperation investment matching unit to the customer.

4. The system of claim 1, further comprising at least one storage unit which is connected to the transmission and reception unit and stores the fund investment request, which is connected to the authentication unit and stores authentication results, which is connected to the value evaluation unit and stores the evaluation results, and which is connected to the investment unit and stores a bank statement history of the investment funds for the customer.

5. A system for providing a talent donation bank service, which provides a talent donation bank service in association with a school server for granting a talent qualification degree, a competence qualification degree or a talent and competence qualification degree, the system comprising:
a storage unit comprising a database which stores user information about a customer who has a talent qualification degree, a competence qualification degree or a talent and competence qualification degree;
a value evaluation unit which evaluates the talent qualification degree, the competence qualification degree or the talent and competence qualification degree as a property value based on a predetermined criterion; and
an investment message transmission unit which transmits an investment guidance message comprising an investment fund amount according to evaluation results of the value evaluation unit to a user terminal of the customer.

6. The system of claim 5, wherein the investment guidance message comprises a calculation criterion for the investment fund amount and a talent donation condition for a repayment of the investment funds.

7. A system for providing a talent donation bank service, comprising a talent donation bank service server connected to a school server which grants a talent qualification degree, a competence qualification degree or a talent and competence qualification degree, a bank server and at least one user terminal over a network, wherein the talent donation bank service server comprises:
a talent donator management unit which manages a talent qualification degree, competence qualification degree or a talent and competence qualification degree of a customer of the user terminal while operating in conjunction with the school server;
a value evaluation unit which evaluates the talent qualification degree, the competence qualification degree or the talent and competence qualification degree as a property value based on a predetermined criterion; and
an investment consultation unit which transmits an investment consultation message comprising an investment fund amount capable of being requested by the customer based on evaluation results of the value evaluation unit to the bank server.

8. The system of claim 7, wherein the investment consultation message comprises a calculation criterion for the investment fund amount and a talent donation condition for a repayment of the investment funds.

9. A method for providing a talent donation bank service in a talent donation bank service server connected to a school server which grants a talent qualification degree, a competence qualification degree or a talent and competence qualification degree, a bank server and at least one user terminal over a network,
wherein the talent donation bank service server comprises a talent donator management unit, a transmission and reception unit, an authentication unit, a storage unit, a value evaluation unit, an investment unit, an investment message transmission unit and an investment consultation unit controlled by a control unit, and
the method comprises a series of processes of:
managing a talent qualification degree, competence qualification degree or talent and competence qualification degree of a user while operating in conjunction with the school server through the talent donator management unit,
receiving a fund investment request of the customer from the user terminal through the transmission and reception unit,
having the talent qualification degree, competence qualification degree or talent and competence qualification degree of the customer authenticated by a corresponding school server through the authentication unit,
storing user information about the customer who has the talent qualification degree, the competence qualification degree or the talent and competence qualification degree through the storage unit,
evaluating the previously authenticated talent qualification degree, the competence qualification degree or the talent and competence qualification degree as a property value based on a predetermined criterion through the value evaluation unit, and
transmitting investment funds to the customer based on the evaluation results through the investment unit, transmitting an investment guidance message comprising the investment fund amount according to the evaluation results to the user terminal of the customer through the investment message transmission unit, or transmitting an investment consultation message comprising the investment fund amount capable of being requested by the customer based on the evaluation results to the bank server through the investment consultation unit.

10. The method of claim 9, further comprising a process of, when the talent donation bank service server further comprises a cooperation investment matching unit connected to the control unit, extracting a cooperation investor whose conformity degree for at least one item of evaluation results is a specific reference value or more from a previously stored cooperation investor list through the cooperation investment matching unit and matching a cooperation investor who has a highest conformity degree with the customer,
wherein the investment unit transmits investment funds of the cooperation investor matched by the cooperation investment matching unit to the customer.
